# EUROPÄISCHE PATENTSCHRIFT

(11) **EP 0 403 915 B1**
(45) Veröffentlichungstag und Bekanntmachung des Hinweises auf die Patenterteilung: **12.05.1993**
(21) Anmeldenummer: 90111013.0
(22) Anmeldetag: 11.06.1990
(51) Int. Cl.: C08F 14/22, C08F 2/52, C09D 127/16

(54) **Vinylidenfluorid-Polymere und Vinylidenfluorid/Trifluor-ethylen-Copolymere**
Vinylidene fluoride polymers and vinylidene fluoride/trifluoroethylene copolymers
Polymères de fluorure de vinylidène et copolymères de fluorure de vinylidène/trifluoroéthylène

(30) Priorität: 22.06.1989 DE 3920535
(43) Veröffentlichungstag der Anmeldung: 27.12.1990
(73) Patentinhaber: SIEMENS AKTIENGESELLSCHAFT, 80333 München (DE)
(72) Erfinder: Kammermaier, Johann, Dr., D-8025 Unterhaching (DE); Rittmayer, Gerhard, Dr., D-8520 Erlangen (DE)

(56) Entgegenhaltungen:
- EP-A- 0 132 684
- THIN SOLID FILMS vol. 74, no. 1, 1980, Lausanne Seiten 69 - 75; Y. OKADA: "Glow-discharge-polymerized difluoroethylene film"

## Beschreibung

Die Erfindung betrifft ein Verfahren zur Herstellung von Schichten aus Vinylidenfluorid-Polymeren und Vinylidenfluorid/Trifluorethylen-Copolymeren.

Für Anwendungen in der Mikroelektronik, beispielsweise als integrierbare Einzelschichtkondensatoren (mit einer Kapazitätsdichte > 10 nF /cm²) für Speicherbausteine, oder als piezo- oder pyroelektrische Dünnschichtelemente werden Polymere auf Kunststoffbasis mit ferroelektrischen Eigenschaften oder zumindest mit einer Dielektrizitätszahl > 5 im unpolarisierten Zustand benötigt. Die einzigen Vertreter ferroelektrischer Kunststoffe sind bislang Polymere aus Vinylidenfluorid, d.h. Polyvinylidenfluorid (PVDF), und Copolymere aus Vinylidenfluorid und Trifluorethylen (siehe dazu beispielsweise: "Appl. Phys. Lett.", Vol. 36 (1980), Seiten 286 bis 288).

Die Synthese von Polyvinylidenfluorid, d.h. Poly(1.1-difluorethylenen), und Vinylidenfluorid/Trifluorethylen-Copolymeren erfolgt bisher ausschließlich auf konventionell chemischem Weg, d.h. durch Polymerisation der entsprechenden Monomeren mit Hilfe von Katalysatoren, beispielsweise durch peroxidkatalysierte Emulsions- oder Suspensionspolymerisation von Vinylidenfluorid bei erhöhter Temperatur und erhöhtem Druck. Die Polymeren bzw. Copolymeren werden dann zu Gießfolien verarbeitet, beispielsweise aus Lösungen in Methylethylketon, und die Gießfolien werden dann - zur Erzielung ferroelektrischer Eigenschaften - bei Temperaturen oberhalb 100°C bis zum Vierfachen der ursprünglichen Länge gereckt und in diesem Zustand durch rasche Abkühlung eingefroren und/oder mittels elektrischer Felder bis 100 V/µm polarisiert.

Die bekannten ferroelektrischen Kunststoffe sind bislang nur als Folien mit einer Mindestdicke von ca. 10 µm verfügbar. Für die Anwendungen in der Mikroelektronik müßten diese Materialien aber eine sehr viel geringere Dicke aufweisen, und zwar herunter bis zum sub-µm-Bereich.

Aufgabe der Erfindung ist es, ein Verfahren anzugeben, das die Herstellung von Schichten aus Vinylidenfluorid-Polymeren und Vinylidenfluorid/Trifluorethylen-Copolymeren mit einer Dicke < 10 µm erlaubt, wobei aber gleichzeitig die Dielektrizitätszahl bzw. die ferroelektrischen Eigenschaften denjenigen der bislang bekannten Materialien entsprechen.

Dies wird erfindungsgemäß dadurch erreicht, daß ein Monomer in Form von Vinylidenfluorid oder einem Gemisch aus Vinylidenfluorid und Trifluorethylen in einer Konzentration ≦ 5.10⁻⁹ mol/cm³ einer durch Mikrowellen angeregten Niederdruck-Plasmapolymerisation unterworfen wird, und daß das Polymere bzw. Copolymere bei einer elektrischen Feldstärke < 850 V/cm auf einem Substrat abgeschieden wird. Unter "elektrischer Feldstärke" wird dabei die Amplitude Eₒ der wirksamen Feldstärke im Bereich des Substrats verstanden.

Die Plasmapolymerisation bietet grundsätzlich die Möglichkeit zur Herstellung von Polymeren in Form dünner Schichten. Aus der EP-PS 0 132 684 ist es außerdem bekannt, bei der Erzeugung von sogenannten Glimmpolymerisat-Schichten auf einem Substrat - aus monomeren Kohlenwasserstoffen und/oder Fluorkohlenstoffen mittels einer Hochfrequenz-Niederdruck-Glimmentladung - die Glimmentladung im Mikrowellenbereich zwischen 0,5 und 1000 GHz durchzuführen, wobei bei der Mikrowellenentladung die Amplitude der wirksamen Feldstärke im Bereich des Substrats ≦ 850 V/cm beträgt. Die Mikrowellenentladung wird dabei bei einem Druck von 0,1 bis 1 mbar durchgeführt, vorzugsweise bei einem Druck von ca. 0,5 mbar.

Bei diesem Verfahren können beispielsweise Ethylen, Propen, Buten, Butadien und Cyclohexen als Kohlenwasserstoff-Monomere eingesetzt werden. Als Fluorkohlenstoffe dienen perfluorierte Verbindungen, wobei Octafluorcyclobutan bevorzugt wird. Weitere einsetzbare perfluorierte Verbindungen sind Tetrafluorethylen, Perfluorpropen, Perfluorbuten und Perfluorcyclohexan.

Plasmapolymerisate aus Vinylidenfluorid bzw. aus Vinylidenfluorid und Trifluorethylen mit Eigenschaften entsprechend konventionell hergestellten Polymerisaten sind bislang nicht bekannt. Der Grund für die Tatsache, daß das gängige Verfahren der Plasmapolymerisation bei diesen Verbindungen nicht zum Erfolg führt, dürfte darin liegen, daß in Niederdruckplasmen unter den üblichen Bedingungen aus den Molekülen der Monomeren Fluor- und Wasserstoffatome abgetrennt und mit dem Gasstrom abgeführt werden, so daß sie der Schichtbildung entzogen sind. Die Plasmapolymerisate weisen somit eine andere Elementarzusammensetzung auf als die Monomeren, sie sind stark vernetzt und ferroelektrisch nicht polarisierbar.

Bei der Plasmapolymerisation von Fluorkohlenstoffen, wie Octafluorcyclobutan, d.h. perfluorierten Kohlenwasserstoffen, kann eine strukturschädliche Fluorabspaltung aus den Monomeren zwar nicht in den meist üblichen Radiofrequenz-angeregten Plasmen unterdrückt werden, wohl aber in Mikrowellen-angeregten Plasmen bei der Abscheidung im Bereich niedriger elektrischer Feldstärken, entsprechend dem aus der EP-PS 0 132 684 bekannten Verfahren. Zur Plasmapolymerisation von Verbindungen wie Vinylidenfluorid und Trifluorethylen, die - im Gegensatz zu perfluorierten Kohlenwasserstoffen - (lediglich) partiell fluorierte Kohlenwasserstoffe darstellen, ist aber auch dieses Verfahren nicht geeignet. Offensichtlich führt hierbei nämlich in den Bereichen des Plasmas mit höherer Energiedichte die unvermeidbare Fluor- und Wasserstoffabspaltung aus den Monomeren - aufgrund vergleichsweise hoher Abscheideraten an der Reaktorwand, insbesondere im Bereich des Mikrowelleneintrittspfades - zu leitenden kohlenstoffhaltigen Schichten, welche die Entladung sehr schnell zum Erlöschen bringen.

Es konnte deshalb nicht vorhergesehen werden und es war sehr überraschend, daß dann, wenn eine vergleichsweise niedrige Konzentration des Monomeren im Plasma eingestellt wird, wie dies beim Verfahren nach der Erfindung der Fall ist, auch Vinylidenfluorid und Trifluorethylen der Plasmapolymerisation zugänglich sind. Die niedrige Konzentration des Monomeren wird dabei vorteilhaft in der Weise eingestellt, daß entweder der Partialdruck des Monomeren < 100 µbar beträgt oder das Monomere im Gemisch mit einem Inertgas bei einem Gesamtdruck > 100 µbar eingesetzt wird, wobei die Monomerkonzentration vorzugsweise < 10 Vol.-% beträgt. Als Inertgas dient dabei vorzugsweise Stickstoff oder ein Edelgas. Mit "Edelgas" werden im Rahmen der vorliegenden Patentanmeldung die gasförmigen Elemente Helium, Neon, Argon, Krypton und Xenon bezeichnet. Diese Stoffe können allein oder im Gemisch untereinander zum Einsatz gelangen, auch im Gemisch mit Stickstoff; bevorzugt wird Argon verwendet.

Beim erfindungsgemäßen Verfahren wird das Monomere somit stark verdünnt, d.h. mit einem Inertgas vermischt, oder mit sehr niedriger Dichte, d.h. bei geringen Drücken, in ein mit Mikrowellen angeregtes Niederdruckplasma eingeleitet; die Abscheidung erfolgt dann bei elektrischen Feldstärken < 850 V/cm, d.h. direkt an der Grenze des sichtbaren Plasmas oder dicht außerhalb dieser Grenze. Bei der Verwendung eines Inertgases kann dieses dem Plasmapolymerisationsreaktor zusammen mit dem Monomeren zugeführt werden. Vorteilhaft wird das Inertgas aber getrennt vom Monomeren in den Reaktor eingeleitet, und zwar unmittelbar im Bereich des Plasmas.

Als Monomeres dient beim erfindungsgemäßen Verfahren Vinylidenfluorid (CH₂=CF₂), d.h. 1.1-Difluorethylen, oder ein Gemisch aus Vinylidenfluorid und Trifluorethylen (CHF=CF₂). Das Gemisch aus Vinylidenfluorid und Trifluorethylen enthält dabei vorzugsweise zwischen 20 und 50 Mol-% an Trifluorethylen. Derartige Gemische enthalten Vinylidenfluorid und Trifluorethylen beispielsweise im folgenden Verhältnis (in Mol-%): 78:22, 73:27, 65:35 und 52:48.

Anhand von Ausführungsbeispielen soll die Erfindung noch näher erläutert werden.

Zur Durchführung des erfindungsgemäßen Verfahrens dient ein sogenannter Plasmapolymerisationsreaktor, in welchem ein oder mehrere Substrate, beispielsweise aus Glas oder Metall oder in Form von Siliciumwafern, angeordnet sind. Der zylinderförmige Reaktor ist in seinem zentralen Bereich von einer Resonatorkavität umgeben, die an einen Mikrowellengenerator (Frequenz: beispielsweise 2,45 GHz) angeschlossen ist. Die Abscheidung der Schicht vollzieht sich jeweils an der Grenze bzw. dicht benachbart außerhalb des sichtbaren Plasmas, das sich im wesentlichen im Bereich der Resonatorkavität ausbildet. Dabei erfolgt die Schichtabscheidung im allgemeinen gasstromaufwärts, bezogen auf das Monomergas.

Das gasförmige Monomere bzw. Monomerengemisch wird dem Reaktor stets außerhalb des sichtbaren Plasmabereiches zugeführt, im allgemeinen an einem der beiden Reaktorenden. Der Reaktor ist dazu durch eine Gasleitung mit einem Vorratsgefäß für das Monomere verbunden. Bei der Verwendung eines Inertgases, wie Argon, kann in diese Gasleitung eine zweite Leitung münden, an die ein Vorratsgefäß für das Inertgas angeschlossen ist. In den beiden Gasleitungen sind jeweils ein Nadelventil, ein Druck- und ein Durchflußmeßgerät angeordnet. Das zweite Ende des Reaktors ist durch eine Gasleitung, in der ein Drosselventil und gegebenenfalls eine Kühlfalle angeordnet ist, mit einer Vakuumpumpe verbunden.

Wird das Inertgas getrennt vom Monomeren in den Reaktor eingeleitet, was vorzugsweise im Bereich der mittig angeordneten Resonatorkavität erfolgt, so ist es vorteilhaft, das Monomere - zur Erzielung symmetrischer Strömungsverhältnisse - an beiden Reaktorenden zuzuführen; die Abführung des Gemisches aus unverbrauchtem Monomeren und Inertgas erfolgt in diesem Fall dann in der Mitte des Reaktors im Bereich des sichtbaren Plasmas. Bei mittiger Zuführung des Inertgases wird das sichtbare Plasma weitestgehend von Spezies aus dem Inertgas getragen, und dementsprechend wird das Monomere weitgehend vom Plasma ferngehalten. Da auf diese Weise ein viel geringerer Anteil von Monomermolekülen durch das Plasma strukturschädigend angeregt wird als dies bei der Abwesenheit von Inertgas der Fall ist, kann bei dieser Verfahrensvariante - zur Erhöhung der Abscheiderate - ein höherer Monomergaseintrag erfolgen als dies sonst der Fall ist.

Die Herstellung von Polyvinylidenfluorid erfolgt beispielsweise aus reinem, d.h. unverdünntem Vinylidenfluorid oder aus einem Gemisch von Vinylidenfluorid und Argon mit einem Anteil des Monomeren von 1 Vol.-%. Im ersten Fall wird ein Druck < 70 µbar eingestellt, entsprechend einer Monomerkonzentration von ca. 3.10⁻⁹ mol/cm³. Im zweiten Fall beträgt der Druck ca. 250 µbar und die Monomerkonzentration ca. 1.10⁻¹⁰ mol/cm³. Die in den Reaktor eingespeiste Leistung beträgt im ersten Fall 27 W und im zweiten Fall 40 W, entsprechend 14 bzw. 20 % der Leistung des Mikrowellengenerators.

In beiden Fällen erfolgt die Abscheidung des Polymeren gasstromaufwärts unmittelbar außerhalb des sichtbaren Plasmas bei Feldstärken < 850 V/cm, wobei jeweils 0,3 µm dicke Schichten hergestellt werden. Die Dielektrizitätszahl der Polymerschichten liegt in beiden Fällen über 6, der dielektrische Verlustfaktor bei 1 kHz beträgt 5.10⁻².

## Patentansprüche

1. Verfahren zur Herstellung von Schichten aus Vinylidenfluorid-Polymeren und Vinylidenfluorid/Trifluorethylen-Copolymeren, **dadurch gekennzeichnet,** daß ein Monomer in Form von Vinylidenfluorid oder einem Gemisch aus Vinylidenfluorid und Trifluorethylen in einer Konzentration ≦ 5.10⁻⁹ mol/cm³ einer durch Mikrowellen angeregten Niederdruck-Plasmapolymerisation unterworfen wird, und daß das Polymere bzw. Copolymere bei einer elektrischen Feldstärke < 850 V/cm auf einem Substrat abgeschieden wird.

2. Verfahren nach Anspruch 1, **dadurch gekennzeichnet,** daß das Gemisch aus Vinylidenfluorid und Trifluorethylen zwischen 20 und 50 Mol-% Trifluorethylen enthält.

3. Verfahren nach Anspruch 1 oder 2, **dadurch gekennzeichnet,** daß der Partialdruck des Monomeren < 100 µbar beträgt.

4. Verfahren nach Anspruch 1 oder 2, **dadurch gekennzeichnet,** daß das Monomere im Gemisch mit einem Inertgas bei einem Gesamtdruck > 100 µbar eingesetzt wird.

5. Verfahren nach Anspruch 4 , **dadurch gekennzeichnet,** daß die Monomerkonzentration im Gemisch < 10 Vol.-% beträgt.

6. Verfahren nach Anspruch 4 oder 5, **dadurch gekennzeichnet,** daß als Inertgas Stickstoff oder ein Edelgas, insbesondere Argon, verwendet wird.

7. Verfahren nach einem der Ansprüche 4 bis 6, **dadurch** **gekennzeichnet,** daß das Inertgas getrennt vom Monomeren in den Plasmapolymerisationsreaktor eingeleitet wird, und zwar unmittelbar im Bereich des Plasmas.

## Claims

1. Process for preparing layers of vinylidene fluoride polymers and vinylidene fluoride trifluoroethylene copolymers, characterised in that a monomer in the form of vinylidene fluoride or a mixture of vinylidene fluoride and trifluoroethylene in a concentration of ≦ 5x10⁻⁹ mol/cm³ is subjected to a low pressure plasma polymerisation which is excited by microwaves, and in that the polymer or copolymer is deposited onto a substrate at an electric field strength of <850 V/cm.

2. Process according to claim 1, characterised in that the mixture of vinylidene fluoride and trifluoroethylene contains between 20 and 50 mol% trifluoroethylene.

3. Process according to claim 1 or 2, characterised in that the partial pressure of the monomer amounts to < 100 µbar.

4. Process according to claim 1 or 2, characterised in that the monomer is used in the mixture with an inert gas at a total pressure of > 100 µbar.

5. Process according to claim 4, characterised in that the monomer concentration in the mixture amounts to < 10 vol %.

6. Process according to claim 4 or 5, characterised in that nitrogen or a noble gas, in particular argon, is used as the inert gas.

7. Process according to one of claims 4 to 6, characterised in that the inert gas is introduced separately from the monomer into the plasma polymerisation reactor, directly within the region of the plasma.

## Revendications

1. Procédé de préparation de couches de polymères de fluorure de vinylidène et de copolymères de fluorure de vinylidène et de trifluoroéthylène, caractérisé en ce qu'il consiste à soumettre un monomère sous forme de fluorure de vinylidène ou d'un mélange de fluorure de vinylidène et de trifluoroéthylène, en une concentration inférieure ou égale à 5.10⁻⁹ mole/cm³, à une polymérisation par plasma à basse pression induite par des micro-ondes, et à déposer le polymère ou le copolymère sur un substrat sous une intensité de champ électrique inférieure à 850 V/cm.

2. Procédé suivant la revendication 1, caractérisé en ce que le mélange de fluorure de vinylidène et de trifluoroéthylène contient entre 20 et 50 % en mole de trifluoroéthylène.

3. Procédé suivant la revendication 1 ou 2, caractérisé en ce que la pression partielle du monomère est inférieure à 100 µbar.

4. Procédé suivant la revendication 1 ou 2, caractérisé en ce qu'il consiste à utiliser le monomère en mélange avec un gaz inerte sous une pression totale supérieure à 100 µbar.

5. Procédé suivant la revendication 4, caractérisé en ce que la concentration de monomère dans le mélange est inférieure à 10 % en volume.

6. Procédé suivant la revendication 4 ou 5, caractérisé en ce qu'il consiste à utiliser comme gaz inerte de l'azote ou un gaz rare, notamment de l'argon.

7. Procédé suivant l'une des revendications 4 à 6, caractérisé en ce qu'il consiste à introduire le gaz inerte indépendamment du monomère dans le réacteur de polymérisation par plasma, et cela directement dans la région du plasma.
